Europäisches Patentamt

European Patent Office

Office européen des brevets

(19)

(11) **EP 1 469 547 A1**

(12) **EUROPEAN PATENT APPLICATION**

(43) Date of publication:
**20.10.2004 Bulletin 2004/43**

(51) Int Cl.⁷: **H01M 10/40**, H01M 6/40

(21) Application number: **04007104.5**

(22) Date of filing: **24.03.2004**

| | |
|---|---|
| (84) Designated Contracting States:<br>**AT BE BG CH CY CZ DE DK EE ES FI FR GB GR**<br>**HU IE IT LI LU MC NL PL PT RO SE SI SK TR**<br>Designated Extension States:<br>**AL LT LV MK** | (72) Inventors:<br>• **Lewis, David H., Jr.**<br> **Irvine California 92620 (US)**<br>• **Waypa, John J.**<br> **California 90275 (US)** |
| (30) Priority: **27.03.2003 US 400954** | (74) Representative: **Grünecker, Kinkeldey,**<br>**Stockmair & Schwanhäusser Anwaltssozietät**<br>**Maximilianstrasse 58**<br>**80538 München (DE)** |
| (71) Applicant: **Northrop Grumman Corporation**<br>**Redondo Beach, California, 90278 (US)** | |

(54) **MEMS volumetric li/ion battery for space, air and terrestrial applications**

(57)     A MEMS volumetric lithium-ion battery formed using a soft lithography technique. The battery includes a reduced footprint area with a corresponding increase in capacity by exploiting the Z dimension through increased volume, while utilizing a chemistry capable of one Joule per cubic millimeter. The battery may be manufactured to cell sizes of one millimeter and cell volumes of one cubic millimeter. The battery can be formed into battery banks, electrically connected in series and parallel, and integrated into a system-on-a-chip. The battery may also be implemented for on-board applications and is suitable for space, air, and terrestrial applications, and in particular, for providing a MEMS volumetric battery.

**FIG. 1**

**Description**

CROSS-REFERENCE TO RELATED APPLICATIONS

This application is related to co-pending U.S. Patent application Serial No. 09/948,034 entitled "VOLUMETRIC MICRO BATTERIES" filed on September 5, 2001.

BACKGROUND OF THE INVENTION

Field of the Invention

The present invention relates to batteries, and more specifically to micro-volumetric batteries manufactured for micro-electro-mechanical systems (MEMS) utilizing soft lithographic techniques.

Discussion of the Related Art

In the semiconductor industry, there is a continuing trend toward higher device densities. To achieve these high densities there have been, and continue to be, efforts toward scaling down device dimensions (e. g., at sub-micron levels) on semiconductor substrates. In order to accomplish such high device packing densities, smaller and smaller feature sizes are required. However, optical lithography techniques are limited by diffraction and additionally, there are practical limits to minimum features sizes that may be produced. New techniques are continually under development and refinement to provide an ever-increasing number of features on a single substrate. Recent developments in micro-fabrication technologies now permit the introduction of micro-mechanical elements to be formed on a semiconductor substrate.

Micro-Electro-Mechanical Systems (MEMS) comprise the integration of electronics and mechanical elements, sensors, actuators, and the like on a silicon substrate utilizing micro-fabrication technology. The introduction of MEMS technology promises to revolutionize nearly every product category by leveraging the computational ability of microelectronics with the perception capabilities of micro-sensors and the control capabilities of micro-actuators. The fabrication and integration of these elements on a single substrate make possible the realization of complete systems on a chip.

Technical advances allow for new types of functionality to be incorporated directly onto the chip enabling intelligent micro-systems on the chip. Sensors gather information from the environment through measuring mechanical, thermal, biological, chemical, optical, and magnetic properties. Electronics process the information derived from the sensors and direct the actuators to respond by moving, positioning, regulating, pumping, and filtering thereby controlling the environment for the desired results.

A combination of both micro-electronic and micro-mechanical elements, MEMS devices are manufactured using fabrication techniques similar to those used for integrated circuits. The electronics are fabricated using traditional integrated circuit processes (photolithography, e-beam lithography, and the like) and the micromechanical components are fabricated using compatible micro-machining processes that selectively etch away parts of the silicon wafer and/or add new structural layers to form the mechanical and electro-mechanical devices. Newly developed lithographic processes, referred to as soft lithography, aid in the formation of three-dimensional objects.

Soft Lithography is an alternative, non-photolithographic set of micro-fabrication techniques. Soft lithography processes utilize an elastomer block with patterned relief structures on its surface. The patterned elastomer is used as a stamp, mold, or mask (as opposed to a rigid photomask utilized in traditional lithographic processing) to generate micropatterns and microstructures. Since soft lithography techniques do not project light or any other type of radiation for exposure, these techniques are not subject to the diffraction limitations inherent in photolithography. Because an elastomer is used as a stamp or a mold, soft lithography techniques provide the capability to create three-dimensional structures and the ability to generate patterns and structures on non-planar surfaces. With these enabling capabilities, soft lithography permits production of new devices that cannot be readily produced with traditional lithography processes.

The exploitation of MEMS technologies has the potential to completely change the field of electronics. The aerospace, automotive and medical industries can potentially make significant application of such technologies. However, exploitation of these new technologies is limited by the availability of miniature power sources, in particular, batteries. Most potential new devices will require a small, lightweight, efficient, and cost effective source of energy.

Larger consumer electronic devices such as notebook computers, PDA's and cell phones use traditional batteries with positive and negative electrodes stacked upon one another like sheets of paper. To create a battery with more power, additional layers of electrodes are utilized. The result is a more powerful battery at the expense of size and weight. Additionally, when conventional geometries are reduced to the size required for powering a MEMS device, the batteries do not have adequate power. More powerful batteries, smaller than any previously available, are necessary to provide an energy source for MEMS devices if the medical, automotive and aerospace industries are going to be able to fully exploit the potential provided by such new technology. The need for a lightweight battery that will not sacrifice energy for small size is continuing to grow as computers, cell phones, video cameras, and other electronic and/or MEMS devices continue to shrink in size. Small, lightweight energy sources are critical to further and sustain development in this field.

## SUMMARY OF THE INVENTION

The invention disclosed and claimed herein, in one aspect thereof, provides a volumetric micro-battery that is produced using soft lithographic techniques which allow for the battery to be created with a significant thickness along the Z axis while at the same time minimizing the surface area required in the X and Y dimensions. The invention facilitates the utilization of a small footprint, small volume, power source suitable for at least space, air and terrestrial applications, microanalytic systems, biosurfaces and materials, and micro-optics. Exploiting the Z dimension allows for the storage of a maximum amount of energy per unit of surface area and provides for significant energy storage at sub-millimeter dimensions. The battery can then be fabricated according to volume to support a given power application.

In accordance with another aspect of the invention, a battery is provided with cell sizes as small as one millimeter and cell volumes as small as one cubic millimeter. These dimensions and geometries create battery cell sizes and cell volumes comprising the smallest combination of footprint and volume, which approximate a factor of ten or greater in the reduction of footprint size, and a factor increase approximating thirty or more in volume at that small footprint.

In accordance with one aspect of the present invention, a three dimensional battery with a footprint approximating one square centimeter may comprise an electrolyte thickness of approximately one millimeter, which battery is capable of storing more than one hundred times the energy stored of a typical planar battery with the same surface area and an electrolyte thickness of about ten microns.

In accordance with another aspect of the present invention, materials used in the fabrication processes comprise nontraditional materials such as ceramics and plastics, in addition to traditional semiconductor materials such as silicon. The use of such additional materials enables optimizing the materials utilized for fabrication of the electrolyte tank to be more compatible with the selected electrolyte. Optimizing the materials provides a more efficient and reliable power source that has a longer operating lifetime.

In accordance with yet another aspect of the present invention, the batteries may be directly integrated with microelectronic elements to provide on-chip power sources. The utilization of on-chip power sources provides for a complete, self-contained system-on-a-chip implemented with minimum footprint or surface area requirements. On-chip embedded connections provide electrical connections between the battery and the electronics.

In accordance with still another aspect of the invention, the fabrication methodologies implemented for fabricating the three dimensional batteries are compatible with MEMS techniques for producing sensors and actuators, in addition to traditional electronic components. Since the fabrication methodologies are compatible, complete self-powered systems on a chip may be fabricated which include sensors, electronics, actuators, and an embedded power source in accordance with an aspect of the invention.

In accordance with yet another aspect of the invention, individual battery cells are distributed throughout MEMS or other electronic type devices. Such battery cells are located to provide localized power sources to sensors, electronics, and/or actuators where necessary. The small achievable size and high-energy storage per unit of area allow for effective distribution of stored energy throughout the devices. This distribution of energy storage throughout the devices provides for a more efficient use of the stored energy and minimizes losses associated with distribution of energy from an off-chip or centrally located on-chip power source.

The following description and the annexed drawings set forth in detail certain illustrative aspects of the invention. These aspects are indicative, however, of but a few of the various ways in which the principles of the invention may be employed and the present invention is intended to include all such aspects and their equivalents. Other advantages and novel features of the invention will become apparent from the following detailed description of the invention when considered in conjunction with the drawings.

## BRIEF DESCRIPTION OF THE DRAWINGS

FIG. 1 illustrates a MEMS volumetric battery in accordance with the present invention.

FIG. 2 illustrates a comparison between a conventional planar battery and a MEMS volumetric battery of the present invention.

FIG. 3 illustrates a graph of a comparison of the energy storage capacity of a volumetric battery versus a planar battery in accordance with the invention.

FIG. 4 illustrates a graph that represents the significant advantage in size and storage capacity of the volumetric battery of the present invention.

FIG. 5 is a graph illustrating that the surface area required for any given amount of energy is significantly smaller in a cubic MEMS volumetric battery than a typical square planar battery.

FIG. 6 is an illustration of a MEMS volumetric battery of the present invention that utilizes nontraditional materials at the electrolyte interface.

FIG. 7 illustrates a block diagram of chemical reactions that may take place within a battery cell implemented in accordance with the present invention.

FIG. 8 illustrates an electronic device comprising one or more volumetric batteries structured in accordance with the present invention.

FIG. 9 illustrates an exemplary MEMS-type system-on-a-chip.

FIG. 10 illustrates a flow chart of the process for making the battery of the present invention.

<u>DETAILED DESCRIPTION OF INVENTION</u>

The present invention is now described with reference to the drawings and illustrations. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention. The terms "component" and "system" as used in this application are intended to refer to an electronic device, an energy storage device, or a MEMS related device.

The present invention overcomes limitations in the prior art by utilizing soft lithography techniques to produce a volumetric micro-battery with substantially increased capacity. The battery includes a small footprint, small volume, and power output capabilities suitable for space, air, and terrestrial applications, and in particular, for providing MEMS applications. The subject invention provides a volumetric MEMS battery and method for making the same.

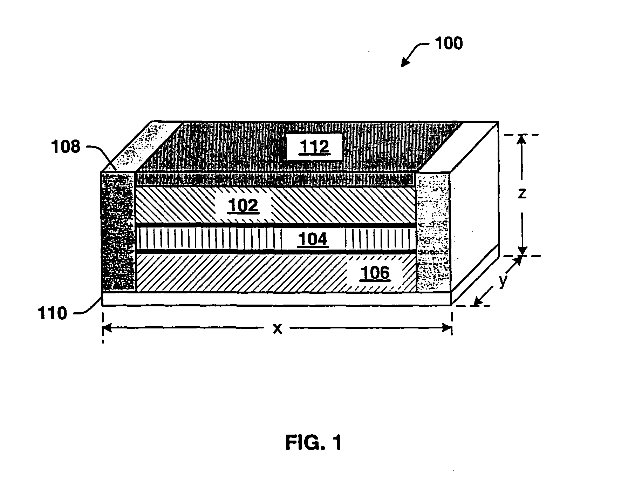

FIG. 1 illustrates a soft lithography volumetric battery 100 in accordance with the present invention. One structure of the battery 100 comprises an anode 102, an electrolyte separator 104, and a cathode 106. The anode 102 comprises lithium (Li), the cathode 106 is comprised of manganese dioxide ($MnO_2$), and electrolyte separator 104 is an organic electrolyte separator such as a mixture of propylene carbonate and 1,2-dimethoyethane. The battery 100 includes end blocks 108 utilized for forming the structure of the battery 100, and a cap material 112 for enclosing the top of the battery 100. Thus the battery 100 may be a sealed device. The fabrication begins generally with a base material 110 over which the end blocks 108, cathode 106, tank material 104 and anode material 102 are deposited. Since this is illustrated as a partial cross-section isometric of the battery 100, the side material is not shown. Thus the battery 100 may also include a side material utilized in conjunction with the end block material 108 and cap 112 for enclosing the battery 100. It is to be appreciated that although the battery 100 is shown in rectangular form with a rectangular footprint, the footprint may be virtually any geometric shape, including square, circular, etc., facilitating a corresponding cube, upright rectangular volume, cylinder, etc. Further, spherical shaped micro-batteries may be developed with respective contacts for the anode/cathode provided at the poles of the sphere for the particular application.

The battery 100 may include an x-y footprint similar in size to that of planar batteries. However, a novel aspect of the present invention extends the z-axis substantially such that the battery capacity may exceed that of planar batteries of similar footprint by orders of magnitude. For example, the battery 100 may have footprint dimensions on the order of approximately nine hundred microns per side and a height (or thickness) in the direction of the Z-axis of approximately one millimeter, whereas a planar battery of similar footprint may exhibit a thickness of ten microns. This results in a 100-fold increase in thickness, which also represents a significant increase in capacity for such a micro-battery architecture.

It is to be appreciated that the present invention is not limited to the dimensions illustrated, but in fact may be fabricated on any scale supportable by lithographic, MEMS, soft lithographic, and other similar fabrication processes. In accordance with one aspect of the present invention, MEMS processes and soft lithographic techniques allow battery 100 to be fabricated on dimensions smaller than has heretofore been possible, achieving sub-millimeter dimensions. This allows for the fabrication of smaller battery cell area by approximately a factor of ten (i.e., less than one millimeter square) with a corresponding increase in cell volume by a factor of approximately thirty (i.e., less than one cubic millimeter) than has heretofore been unachievable.

The battery 100 is fabricated using soft lithographic processes. Soft lithography is an alternative, non-photolithographic set of micro-fabrication techniques. An elastomer block, with patterned relief structures on its surface, is a key element of soft lithography. A patterned elastomer is used as a stamp, mold, or mask to generate micropatterns and microstructures *in lieu* of a rigid photomask. Soft lithography techniques do not project light or other types of exposure radiation, and are therefore not subject to the diffraction limitations inherent in photolithography. This permits fabrication of structures below a one-hundred-nanometer barrier that currently limits application of traditional photolithographic techniques. Because an elastomer is used as a stamp or a mold, soft lithography processes provide the capability to create three-dimensional structures as well as the capability to generate patterns and structures on non-planar surfaces. Soft lithographic techniques support a wide variety of materials and surface chemistries not traditionally available for electronic devices.

MEMS technology, coupled with soft lithography techniques, enables devices to be designed and fabricated with unprecedented three dimensional design properties. These characteristics provide for the potential development and production of a wide range of applications, including, but not limited to: RF devices - high-Q inductors and capacitors, tunable or fixed, capacitive or metal contact switches, resonators, filters and antennas; biomedical devices - minimally-invasive surgical instruments, molds for plastic microfluidic parts, implantable devices, pumps, valves, fluid mixers, and drug delivery devices; sensors and actuators - high-force electrostatic actuators, inkjet printheads, multi-axis accelerometers, and gyroscopes; and optical devices - scanning mirrors, fiber alignment devices and optical module packages.

Although the battery described above is comprised of the necessary elements for a lithium ion battery, it is to be understood that the system and method apply equally to other elements that comprise batteries based on different battery chemistries. For example, one alternate embodiment is a solid electrolyte lithium cell comprised of a lithium anode, a poly-2-vinylpyridine cathode, and a lithium iodine electrolyte separator.

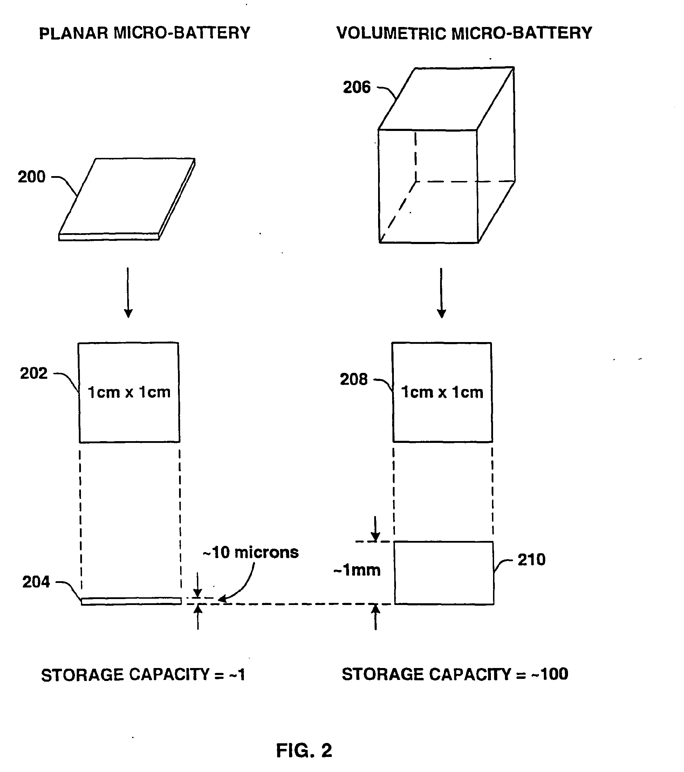

FIG. 2 is an illustration of a comparison of a conventional planar battery and a volumetric battery in accordance with an aspect of the present invention. A typical isometric of a planar type battery 200 is illustrated and produced through traditional processes. The exemplary planar battery 200 is illustrated with square dimensions of 1 cm x 1 cm, as shown in a top view 202. Similarly, a side view 204 illustrates that the planar battery 200 has a thickness of approximately ten microns.

The amount of energy that can be stored in a lithium ion cell is directly proportional to its volume and can be approximated as one Joule/mm$^3$. The energy storage capacity of the planar battery 200 is then approximately one Joule (that is, 10mm x 10mm x 0.01 mm x 1 J/mm$^3$).

For comparison, a volumetric battery 206 of the present invention is produced using soft lithographic processes. Although MEMS processing techniques and soft lithographic processes allow fabrication of batteries on much smaller dimensions, for purposes of comparison in this example, the volumetric battery 206 comprises a similar footprint dimensions of 1 cm x 1 cm (in the X-Y dimension), as illustrated in a top view 208. However, in accordance with the processes of the present invention, the volumetric battery 206 exploits the third spatial Z dimension. A side view 210 of volumetric battery 206 illustrates a thickness of approximately one millimeter. Thus the energy storage of volumetric battery 206 of this example is approximately 10mm x 10mm x 1.0mm x 1J/mm$^3$ = 100 Joules, or 100 times that of planar battery 200.

It is understood that micromachining and soft lithographic processes employed in fabrication of the volumetric battery 206 are capable of producing a volumetric battery with surface area dimensions of less than one millimeter square. For example, in one embodiment, the dimensions of the volumetric battery 206 may be 900 microns x 900 microns x 1 mm.

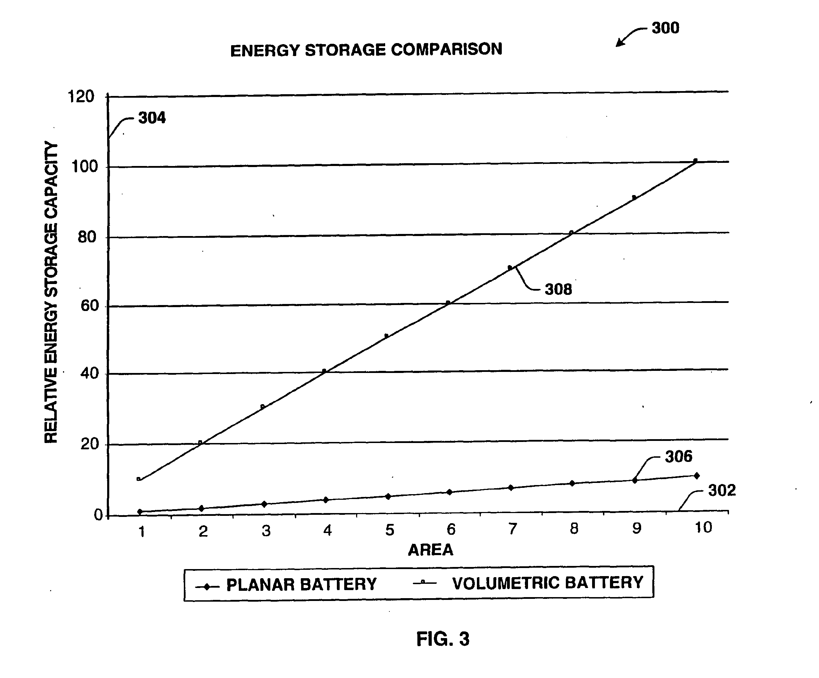

FIG. 3 illustrates a graph 300 of a comparison of the energy storage capacity of a volumetric battery versus a planar battery in accordance with the invention. As indicated, three-dimensional designs enabled by MEMS technologies and soft lithographic processes produce volumetric batteries capable of storing on the order of 100 times as much energy as a typical planar battery. As provided in one example, the volumetric battery may have a thickness that is approximately ten times the thickness of the planar battery. In the comparison of FIG. 3, both the planar battery and the volumetric battery have a common footprint area, but the volumetric battery has a thickness of approximately ten times the thickness of the planar battery. The x-axis 302 represents the surface area occupied by either the planar battery or the volumetric battery, and the y-axis 304 represents the relative energy storage capacity of either battery. Line 306 represents the energy storage capacity of the planar battery versus the footprint area, and line 308 depicts the energy storage capacity of the volumetric battery versus the footprint area.

A comparison of the two lines (306 and 308) reveals that for any given value of surface area, the volumetric battery approximates ten times the storage capacity of the planar battery. The multiple is a function of the ratio of the thickness of the volumetric battery cell with respect to the thickness of the planar battery cell. A relatively low ratio was used for purposes of illustration in FIG. 3. However, it is to be appreciated that the ratio can easily be on the order of one hundred or more. In accordance with one aspect of the present invention, if the volumetric battery were one hundred times as thick as the planar battery, the energy storage capacity of the volumetric battery would be approximately one hundred times that of the planar battery.

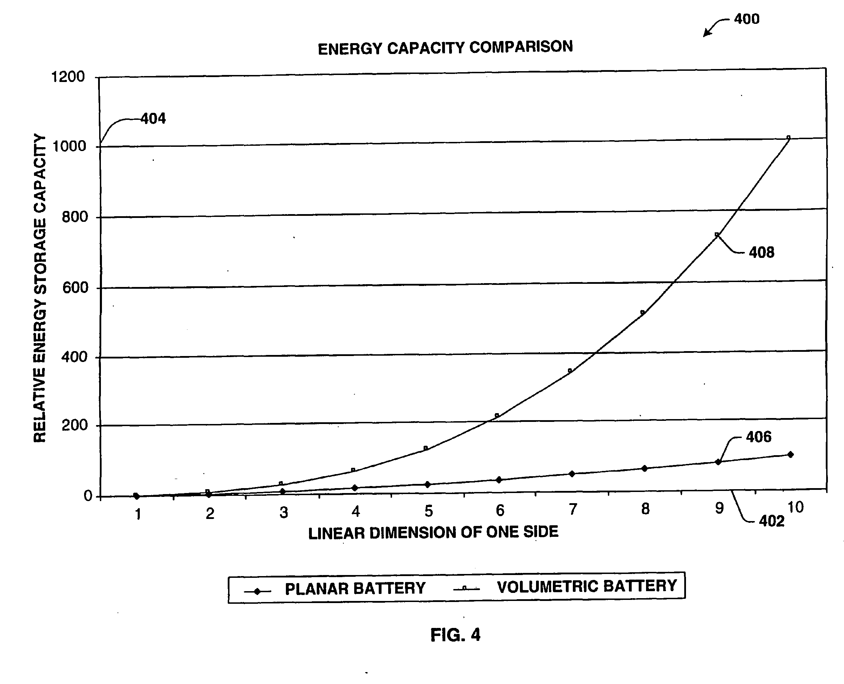

FIG. 4 illustrates a graph 400 that represents the significant advantage in size and storage capacity of the volumetric battery of the present invention. The graph 400 plots the energy storage capacity of a square planar battery versus a volumetric battery of a cubic geometry. For this example, both the planar battery and the volumetric battery share the same footprint dimensions, *i.e.,* a square. The graph normalizes the thicknesses to the planar battery, such that the planar battery thickness is one unit. Line 402 represents the linear dimension of the x-axis and y-axis occupied by either the planar battery or the volumetric battery. Line 404 represents the relative energy storage capacity of either battery cell. Line 406 depicts the energy storage capacity of the planar battery versus the surface area, and line 408 depicts the energy storage of the volumetric battery capacity versus the surface area.

A comparison of the two lines (406 and 408) reflects the fact that for any given value of footprint surface area, the volumetric battery has many times the storage capacity as the planar battery. The multiple is a function of the ratio of total volume of the volumetric battery cell with respect to the volume of the planar battery cell. As is clearly illustrated, the storage advantage of the volumetric battery grows dramatically as the dimensions of the battery cell increase.

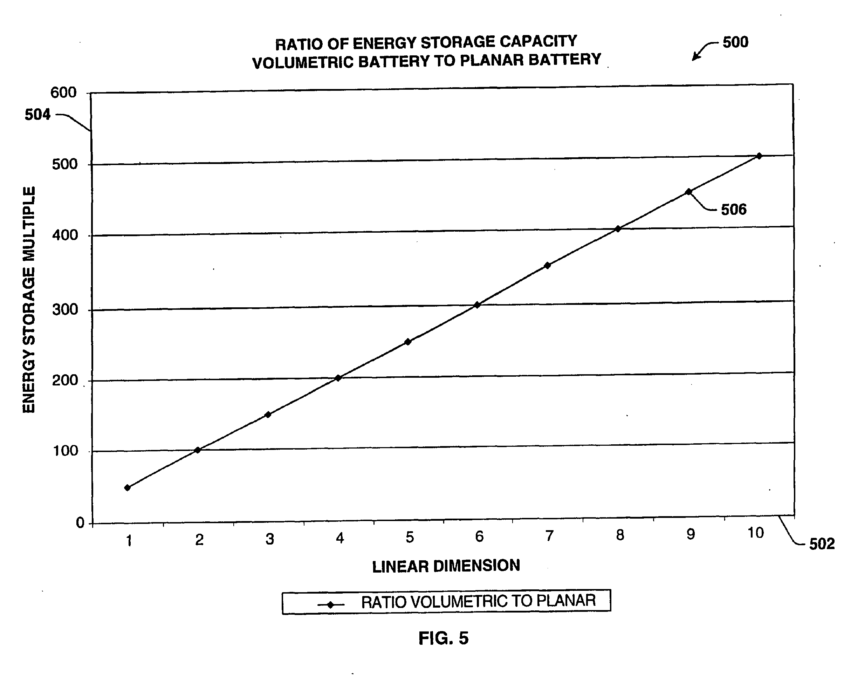

FIG. 5 illustrates a graph 500 for representing the advantages of the volumetric battery over the planar battery. The graph 500 illustrates of the energy storage capacity of a volumetric battery configured with a cubic shape versus a square planar battery twenty microns thick. The x-axis 502 of the graph 500 represents the linear dimension in millimeters of the two sides of a footprint of a planar battery and the three sides of a cubic volumetric battery cell. The y-axis 504 represents an energy storage multiple, defined herein as the ratio of the energy storage capacity of the volumetric battery to that of the planar battery. Line 506 depicts the energy storage multiple as a function of the linear dimension of the planar battery.

A quick review of the graph 500 illustrates that for any desired linear dimension, the volumetric battery stores many times the energy of the planar battery. For example, at a linear dimension of one millimeter (1 mm), the energy storage multiple approximates fifty. At a multiple of five hundred, for example, the linear dimension approximates ten millimeters (10mm). Conversely, it can also be noted that for any given desired energy storage value, the surface area required for a volumetric battery is significantly less than for the planar battery. In fact, it is easily illustrated that the volumetric battery can provide the same amount of energy storage in 1/100th of the required footprint surface area of the planar battery.

The materials used in the fabrication processes may comprise nontraditional photolithographic materials, such as ceramics and plastics, in addition to traditional semiconductor materials like silicon. The use of such additional materials enables optimizing materials utilized for fabrication of the electrolyte tank to be more compatible with the selected electrolyte. A significant contributing reason for the failure of rechargeable batteries is electrolyte failure. In lithium batteries, attack of the lithium anode on a lithium electrolyte promotes battery failure after a number of charge-discharge cycles. Electrolyte failure also results in loss of charge during periods of non-use.

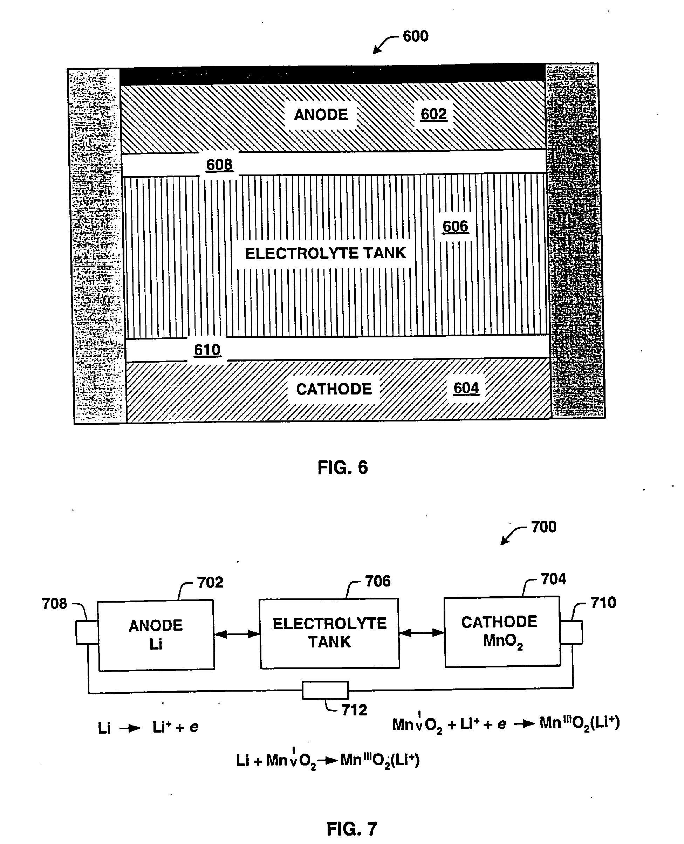

FIG. 6 is an illustration of a MEMS volumetric battery 600 of the present invention that utilizes nontraditional materials at the electrolyte interface. The volumetric battery 600 comprises an anode 602, cathode 604, and an electrolyte tank 606 interstitial to the 602 anode and cathode 604. At a first interface of the anode 602 and the electrolyte tank 606, is a top layer 608. Similarly, at a second interface of the cathode 604 and the electrolyte tank 606, is a bottom layer 610. The top layer 608 and bottom layer 610 may comprise nontraditional materials such as ceramic, plastic, *etc.* The combination of MEMS technologies and soft lithographic techniques promotes the use of such nontraditional materials which, in turn, allow for optimizing material selections at the various internal and external material interfaces of the battery cell. Such material optimization allows materials to be utilized that minimize problems resulting from electrolyte failure and thereby promote longevity and efficiency of the battery cell.

FIG. 7 illustrates a block diagram 700 of chemical reactions that may take place within a battery cell implemented in accordance with the present invention.

An anode 702 comprises Lithium (U), and a cathode 704 comprises manganese dioxide ($MnO_2$). An electrolyte tank 706 comprises an organic electrolyte separator such as a mixture of propylene carbonate and 1,2-dimethoyethane. A battery terminal 708 is physically connected to, and/or may in fact be a part of the anode 702, and battery terminal 710 is physically connected to, and/or may in fact be a part of the cathode 710. The terminals (708 and 710) may be vias, metal wires, or other types of metal connections configured within an electronic or MEMS type device to conduct power to a load 712. The load 712 represents a circuit, sensor, actuator, or any other load device receiving power supplied by the battery. The anode 702 is in contact with the electrolyte tank 706 and the cathode 704 is in contact with the opposite side of electrolyte tank 706.

When the load 712 is placed across battery terminals (708 and 710), electrons will flow from the anode 702 through the load 712 to the cathode 704. The chemical reaction which takes place at the anode, cathode and the overall chemical reaction is represented as follows:

Anode

$$Li \rightarrow Li^+ + e;$$

Cathode

$$Mn^{IV}O_2 + Li^+ + e \rightarrow Mn^{III}O_2(Li^+);$$

and
Overall Reaction

$$Li + Mn^{IV}O_2 \rightarrow Mn^{III}O_2(Li^+).$$

As oxidation takes place at the anode 702, the electrolyte tank 706 facilitates transporting the lithium ion ($Li^+$) to the cathode 704 for reduction. In those implementations where recharging capability is provided, the chemical reactions are reversed. The volumetric lithium battery requires no moving parts, no tanks, lines or valves and also does not create waste heat or exhaust gases. The battery cells may be rechargeable and have a relatively long storage life. The battery cells have been demonstrated to be safe for use in air, space and terrestrial applications.

In accordance with another aspect of the present invention, volumetric batteries are directly integrated with microelectronic elements to provide on-chip power sources. The utilization of on-chip power sources provides for a complete, self-contained system on a chip implemented with a minimum footprint. On-chip embedded connections comprising vias and metal lines provide electrical connections between the volumetric battery and the balance of the electronics.

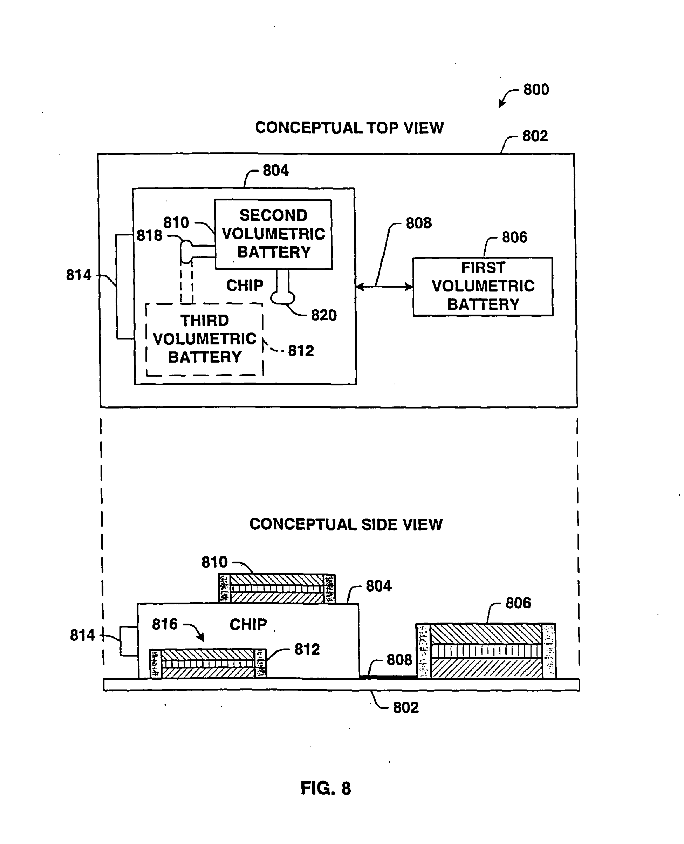

FIG. 8 illustrates an electronic device 800 comprising one or more volumetric batteries structured in accordance with the present invention. Note that the illustration is not to scale, but facilitates conceptually a description of some of the novel aspects of the present invention. In a top view, the device 800 includes a circuit board 802 on which is situated an electronics chip 804 and an external first volumetric battery 806 (similar to battery 100). Of course, the device 800 may include a plurality of such chips to facilitate operation of the device, but for purposes of describing novel aspects of the present invention, only one chip is illustrated. The first battery 806 interfaces to the chip circuitry 804 via one or more onboard circuit connections 808, which connections 808 may be any conventional circuit board interconnects suitable for carrying power transferred between the first battery 806 and the energy consuming device.

One or more other volumetric batteries may be provided *in lieu* of the external first battery 806 or in combination therewith. That is, there may be provided on-chip surface-mount volumetric batteries designed in accordance with architecture of the present invention: a second volumetric battery 810, a third volumetric battery 812, and a fourth volumetric battery 814, all of which are similar to battery 100. It is to be appreciated that such battery architecture facilitates the fabrication of the disclosed micro-battery devices on a chip, the chip 804, to provide power thereto, or for selected circuits included therein.

It is further to be appreciated that such batteries may be mounted in any orientation on the chip 804. In furtherance thereof, the second battery 810 is illustrated as being mounted on the top of the chip 804, and alternatively, or in support to the second battery 810, there is mounted a third battery 812 on the bottom side of the chip 804. Still further, the fourth battery 814 is shown mounted on the side of the chip 804. (As mentioned above, the size of the batteries (806, 810, 812, and 814) relative to the chip may be significantly smaller than illustrated.) The third battery 812 may be mounted in a prefabricated recessed area 816 such that the chip 804 may be fabricated as a surface mount chip. In this case, the third battery 812 may be recessed into the form factor of the chip 804 such that the bottom of the chip 804 is mounted flush with the top surface of the circuit board 802.

The onboard batteries (810, 812, and 914) may connect to the circuitry of the chip 804 by a combination of vias 818 and metal lines 820. The vias 818 and metal lines 820 conduct power to allow the chip 804 to be partially or fully self powered such that the chip 804 functions as a self-contained unit. It is appreciated that banks of batteries may be implemented in series and/or parallel to increase the capabilities of the battery source by, for example, interconnecting the second battery 810 to the third battery 812 utilizing the vias 818 and metal lines 820.

The high energy density per unit of surface area of the volumetric battery allows for a significant increase in the amount of energy storage available. In accordance with one aspect of the invention, the volumetric batteries are placed directly on chips with high-speed circuits. The result is circuits that perform at higher speeds and more efficiently than similar circuits supplied with off-chip sources of power.

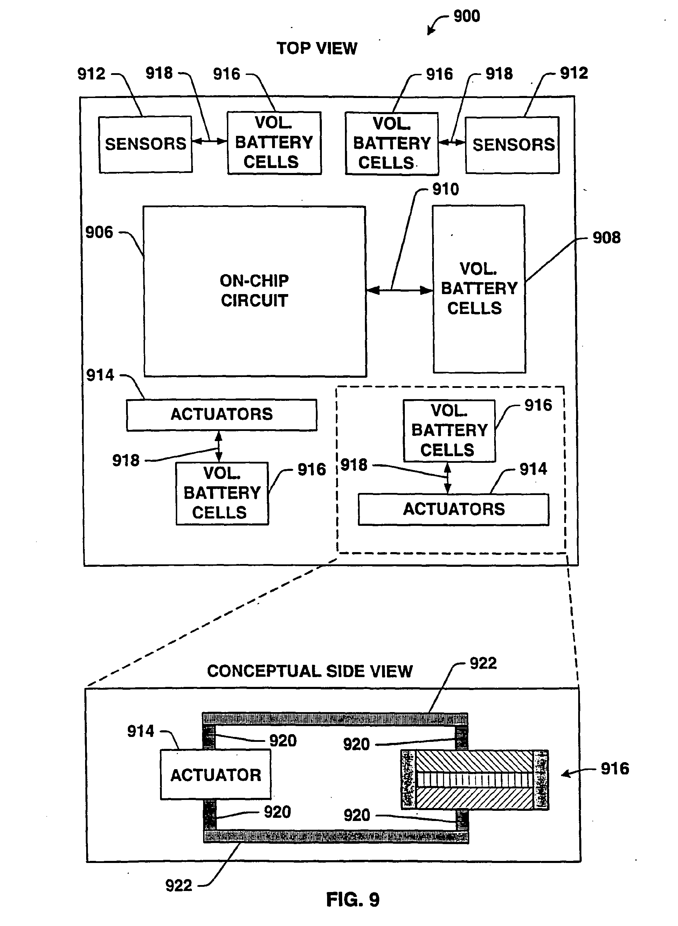

FIG. 9 illustrates an exemplary MEMS-type system-on-a-chip 900. The system 900 is illustrated conceptually in both a top view and a side view. The system 900 comprises a chip 902 further including at least an on-chip circuit 906, a first volumetric battery 908 (similar to battery 100), and embedded connections 910 between the first battery 908 and the on-chip circuit 906. However, as a system-on-a-chip, the system 900 may further comprise one or more sensors 912, one or more actuators 914, and one or more individual MEMS battery cells 916 (similar to battery 100) for supplying power to the corresponding sensors 912 and actuators 914. The volumetric battery cells 916 connect to the sensors 912 and actuators 914 by a number of embedded connections 918. Although sensors and actuators are used in this illustration, it is understood that any suitable electronic, MEMS, or other type of power consuming device may be utilized on the chip, and have power provided thereto by the volumetric batteries (908 and 916).

In accordance with another aspect of the invention, the volumetric battery cells (908 and 916) are distributed throughout the chip 902. The distribution of the volumetric batteries allows for more efficient use of energy as the individual volumetric battery cells 916 are placed in close proximity to the demand. In this example, each sensor 912 and each actuator 914 has an individual volumetric battery cell 916 proximately located. In one embodiment, each individual volumetric cell 916 is operatively connected to each other so as to provide power in parallel. In another embodiment, the individual volumetric battery cells 916 operate as separate power units facilitating the use of power sources of different voltages to be placed where individual circuitry, sensors, and/or actuators have varying needs. In this manner, energy may be stored close to where it is needed and may be more efficiently provided than that obtained from an off-chip source or even a centralized on-chip source.

Referring again to FIG. 9, the side view is a partial side view of an individual actuator 914 and corresponding volumetric battery cell 916 that serves to provide the necessary energy for its use. Although illustrated in a side view, it is understood that the actuators 914, sensors 912, other on-chip circuitry, or any other type of device in need of a power source may be utilized and have power supplied thereto in this fashion. The embedded connections 918 comprise a series of vias 920 and metal lines 922 that connect the battery 916 to at least the actuator 914.

The volumetric batteries described herein have a much higher energy density per unit area and per unit volume than has been possible in the past. As such, the volumetric batteries are ideal sources of energy for numerous applications where space, volume and weight are critical. Such applications include, but are not limited to, on-card/on-chip high-speed electronics, microsensors of a few cubic millimeters in volume, precision munitions, and MEMSat interceptors (*i.e.,* small silicon satellites of approx ten centimeter lengths).

It is to be appreciated that although the disclosed volumetric batteries have been described in association with space and weight restrictive requirements, the batteries are equally applicable to applications where space, volume, and weight are not at a premium.

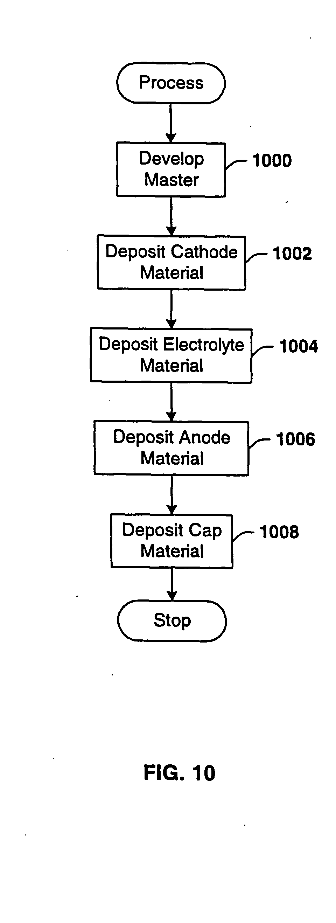

FIG. 10 illustrates a flow chart of the process for processing a volumetric battery of the present invention. While, for purposes of simplicity of explanation, the methodology is shown and described as a series of acts, it is to be understood and appreciated that the present invention is not limited by the order of acts, as some acts may, in accordance with the present invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

The process begins at 1000 where a master mold (or stamp) is developed. The mold defines the form factor of the battery, and includes the base, sides, and ends. The base material may include one or a combination of many materials, including glass or ceramic. At 1002, a cathode material is formed on the base as the first layer of the battery, followed by the electrolyte material, at 1004. At 1006, the anode material is then formed over the electrolyte material, followed by the cap material to enclose the battery, at 1008. Of course, the order of forming the anode cathode and electrolyte may be reversed insofar as the anode may be formed before the cathode.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1.   A volumetric lithium-ion energy storage device, comprising:

an anode;
a cathode; and
an electrolyte separator interstitial to and in communication with the anode and the cathode, which anode, cathode and electrolyte separator form a micro-battery having a volume of no more than one cubic millimeter.

2.   The device of claim 1, the electrolyte separator is approximately one millimeter thick.

3.   The device of claim 1 is approximately one millimeter thick.

4.   The device of claim 1, the anode is comprised of lithium.

5.   The device of claim 1, the cathode is comprised of manganese dioxide.

6.   The device of claim 1, the electrolyte separator is comprised of at least one of propylene carbonate, 1,2-dimethoyethane and, a mixture of propylene carbonate and 1,2-dimethoyethane.

7.   The device of claim 1, further comprising an optimizing material formed between at least one of the electrolyte separator and the anode, and the electrolyte separator and the cathode.

8.   The device of claim 7, the optimizing material is at least one of ceramic and plastic.

9.   The energy storage device of claim 1 manufactured according to soft lithography techniques.

10.  The energy storage device of claim 1 integrated into a system-on-a-chip.

11.  The device of claim 1 having an increased energy storage capacity with a corresponding reduction in footprint area.

12.  The device of claim 1 providing energy storage capacity of approximately one joule per cubic millimeter.

13.  The device of claim 1 is a rechargeable device.

14.  An lithium-ion energy storage device manufactured according to a soft lithography technique, comprising:

an anode;

a cathode; and

an electrolyte separator interstitial to and in communication with the anode and the cathode, the anode, cathode and electrolyte forming the energy storage device which is volumetric, the volumetric device having at least one of a cell size of no more than one millimeter and a cell volume of no more than one cubic millimeter.

15. An electronic system integrated on a single chip, comprising:

a high-speed circuit; and

one or more volumetric batteries for providing power to all or selected portions of the high-speed circuit.

16. The system of claim 15, the one or more volumetric batteries distributed throughout the chip and connected electrically in at least one of series and parallel.

17. A system integrated on a single chip comprising:

a circuit;

one or more sensors operatively connected to the circuit for providing sensing signals to the circuit;

one or more actuators operatively connected to the circuit for providing actuator signals to the circuit; and

one or more volumetric batteries operatively connected to provide power to at least one of the circuit, one or more sensors, and one or more actuators.

18. The system of claim 17, the one or more volumetric batteries distributed throughout the chip proximate to an entity that it powers.

19. The system of claim 17, the one or more volumetric batteries electrically connected in at least one of in series and in parallel.

20. The system of claim 17, the one or more volumetric batteries distributed individually on the chip and off the chip.

21. A method of providing a lithium-ion volumetric battery, the method comprising utilizing a soft lithography technique to produce an anode, cathode and electrolyte separator, the combination of which form a micro-battery having a volume of no more than one cubic millimeter.

22. The method of claim 21, the electrolyte separator approximately one millimeter thick.

23. The method of claim 21, the volumetric battery having cubic dimensions of one millimeter per side.

24. The method of claim 21, the volumetric battery having at least one of a cell size of no more than one millimeter and a cell volume of no more than one cubic millimeter.

**FIG. 1**

PLANAR MICRO-BATTERY

VOLUMETRIC MICRO-BATTERY

206

200

202

1cm x 1cm

208

1cm x 1cm

~10 microns

~1mm

210

204

STORAGE CAPACITY = ~1

STORAGE CAPACITY = ~100

FIG. 2

ENERGY STORAGE COMPARISON

FIG. 3

EP 1 469 547 A1

ENERGY CAPACITY COMPARISON

FIG. 4

**RATIO OF ENERGY STORAGE CAPACITY
VOLUMETRIC BATTERY TO PLANAR BATTERY**

FIG. 5

EP 1 469 547 A1

**FIG. 6**

$$Li \rightarrow Li^+ + e$$

$$Mn^{V}_{\phantom{V}}O_2 + Li^+ + e \rightarrow Mn^{III}O_2(Li^+)$$

$$Li + Mn^{V}_{\phantom{V}}O_2 \rightarrow Mn^{III}O_2(Li^+)$$

**FIG. 7**

800

CONCEPTUAL TOP VIEW

802

804

SECOND
VOLUMETRIC
BATTERY

810

818

814

808

806

FIRST
VOLUMETRIC
BATTERY

CHIP

820

THIRD
VOLUMETRIC
BATTERY

812

CONCEPTUAL SIDE VIEW

810

804

806

814

816    CHIP

812

808

802

FIG. 8

16

900

TOP VIEW

912    918    916                916    918    912

SENSORS ←→ VOL. BATTERY CELLS    VOL. BATTERY CELLS ←→ SENSORS

910

906    ON-CHIP CIRCUIT ←→ VOL. BATTERY CELLS    908

914    ACTUATORS

918 ←→ VOL. BATTERY CELLS    916

VOL. BATTERY CELLS    916

918 ←→ ACTUATORS    914

CONCEPTUAL SIDE VIEW    922

914    920    920    916

ACTUATOR

920    920

922

FIG. 9

Process

Develop
Master — 1000

Deposit Cathode
Material — 1002

Deposit Electrolyte
Material — 1004

Deposit Anode
Material — 1006

Deposit Cap
Material — 1008

Stop

**FIG. 10**

EP 1 469 547 A1

**European Patent Office**

## EUROPEAN SEARCH REPORT

Application Number

EP 04 00 7104

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01/80338 A (SCHERSON DANIEL A ; UNIV CASE WESTERN RESERVE (US)) 25 October 2001 (2001-10-25) * page 1, line 18 - page 2, line 30 * * page 7, line 15 - page 9, line 30 * | 1,10-13, 17-20 | H01M10/40 H01M6/40 |
| X | US 6 197 450 B1 (PELED EMANUEL ET AL) 6 March 2001 (2001-03-06) * column 2, lines 39-62; claims 1-6,9; example 1 * * column 4, lines 36-38 * | 1,4,5, 10-13 | |
| X | US 2002/090331 A1 (THESS ANDREAS ET AL) 11 July 2002 (2002-07-11) * paragraphs [0215] - [0232]; figures 13,14 * | 1,11-13 | |
| X | US 2003/044664 A1 (LAKEMAN CHARLES D E ET AL) 6 March 2003 (2003-03-06) | 15-20 | |
| A | * the whole document * | 1-14, 20-24 | TECHNICAL FIELDS SEARCHED (Int.Cl.7) |
| P,X | US 6 610 440 B1 (LAFOLLETTE RODNEY M ET AL) 26 August 2003 (2003-08-26) * column 8, line 52 - column 10, line 11 * * column 14, lines 19,20 * * column 15, lines 1-38 * * column 18, lines 30-56 * * column 21, lines 21-33 * | 1,3,9-24 | H01M |
| P,X | WARTENA R ET AL: "Li-ion microbatteries generated by a laser direct-write method" JOURNAL OF POWER SOURCES, ELSEVIER SEQUOIA S.A. LAUSANNE, CH, vol. 126, no. 1-2, 16 February 2004 (2004-02-16), pages 193-202, XP004487895 ISSN: 0378-7753 p. 195 "2. Experimental" | 1,6, 10-13 | |

The present search report has been drawn up for all claims

| Place of search | Date of completion of the search | Examiner |
|---|---|---|
| Munich | 15 July 2004 | Hammerstein, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

**ANNEX TO THE EUROPEAN SEARCH REPORT
ON EUROPEAN PATENT APPLICATION NO.**                EP 04 00 7104

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2004

| Patent document cited in search report | | Publication date | Patent family member(s) | | Publication date |
|---|---|---|---|---|---|
| WO 0180338 | A | 25-10-2001 | AU | 5352401 A | 30-10-2001 |
| | | | WO | 0180338 A1 | 25-10-2001 |
| US 6197450 | B1 | 06-03-2001 | AT | 224587 T | 15-10-2002 |
| | | | AU | 6119499 A | 15-05-2000 |
| | | | DE | 69903073 D1 | 24-10-2002 |
| | | | DE | 69903073 T2 | 15-05-2003 |
| | | | EP | 1145348 A1 | 17-10-2001 |
| | | | WO | 0025378 A1 | 04-05-2000 |
| US 2002090331 | A1 | 11-07-2002 | US | 6683783 B1 | 27-01-2004 |
| | | | US | 2002090330 A1 | 11-07-2002 |
| | | | US | 2002136683 A1 | 26-09-2002 |
| | | | US | 2002127169 A1 | 12-09-2002 |
| | | | US | 2002102196 A1 | 01-08-2002 |
| | | | US | 2002098135 A1 | 25-07-2002 |
| | | | US | 2002136681 A1 | 26-09-2002 |
| | | | US | 2002127162 A1 | 12-09-2002 |
| | | | US | 2002085968 A1 | 04-07-2002 |
| | | | US | 2002150524 A1 | 17-10-2002 |
| | | | US | 2002159943 A1 | 31-10-2002 |
| | | | US | 2002094311 A1 | 18-07-2002 |
| | | | AU | 6545698 A | 22-09-1998 |
| | | | CA | 2283502 A1 | 11-09-1998 |
| | | | EP | 1015384 A1 | 05-07-2000 |
| | | | JP | 2002515847 T | 28-05-2002 |
| | | | WO | 9839250 A1 | 11-09-1998 |
| | | | EP | 1375460 A2 | 02-01-2004 |
| US 2003044664 | A1 | 06-03-2003 | NONE | | |
| US 6610440 | B1 | 26-08-2003 | US | 2004018421 A1 | 29-01-2004 |
| | | | US | 2004053124 A1 | 18-03-2004 |
| | | | US | 2003006737 A1 | 09-01-2003 |
| | | | US | 2003152815 A1 | 14-08-2003 |

EPO FORM P0459

For more details about this annex : see Official Journal of the European Patent Office, No. 12/82